# EUROPEAN PATENT APPLICATION

(11) **EP 1 281 495 A1**
(43) Date of publication of application: **05.02.2003**
(21) Application number: 01118419.9
(22) Date of filing: 31.07.2001
(51) Int. Cl.: B28B 11/04, B28B 11/00

(54) **Method for decorating tiles and the like, and device for carrying out said method**

(71) Applicant: AIR POWER DIVISION GROUP S.r.l., 41049 SASSUOLO (Modena) (IT)
(72) Inventor: Malavasi, Paolo, 41030 Albareto (Modena) (IT)
(74) Representative: Dall'Olio, Giancarlo

(57) **Abstract**

The tiles decorating method provides the simultaneous glazing and decoration of a series of tiles (1), being transported on a conveyor (3), passing under a glazing head (4) which is able to create a glaze film (5) to be spread onto the same tiles (1).

Said method comprises some operating phases wherein at least one portion (10) of the glaze film (5) is supported and diverted, by means of a plate (31), along an alternative path (11). A decorating glaze (6) is then applied, according to predefined patterns, to said diverted portion (10) of the glaze film (5), subsequently to its output from an output slit (4a) of the glazing head (4), and before it reaches said tile (1), by means of a sprayer (40).

The diverted portion (10) of said glaze film (5), carrying the decorating glaze (6), is then spread on the tiles (1) being moved by the conveyor (3).

The remaining portion of the glaze film (5), not spread on the tiles (1), is collected under the conveyor (3), by means of a tank (7), which is moreover provided with an auxiliary container (8) for the polluted portion of the glaze film to be rejected.

## Description

### Field of the invention

The present invention fits into the technical sector concerning the production of glazed items, like ceramic tiles or the like.

More particularly, the present invention relates to a new method for applying to the tiles, while covering them with a base glaze film, a product fit to create on the tiles surface a decorating pattern. The above product could be a glaze of different colour as well as any other suitable product, as will be described in more detail later. The glaze and decorating product are applied to the tiles while they are moved along a transport line. The present invention also relates a device for carrying out the aforesaid method.

### Description of the known art

It is known that the tiles decoration is a very important item for pushing them in the market. A new and original decoration will often state the commercial success of a tile model. By consequence, there is a strong research work for new and sophisticated methods and patterns for decorating tiles, as well as for new decoration products.

Tiles are normally decorated by means of several techniques, which achieve different decoration results, after a thin film of glaze has been applied thereon. Said film of glaze is fit to obtain a base colour layer for the tiles. Sometimes the glaze film is dried before the decoration step takes place.

In the present technical sector, the glaze film is generally applied to the tiles by means of devices called "glazing heads". A glazing head consist of a kind of funnel, which contains a liquid glaze. New glaze is suitably feed to the funnel by means of known pumps and piping lines. The funnel is preferably airtight, and the glaze pressure inside the funnel is substantially held higher than the atmospheric pressure. Its lower part comprises a pair of counter-facing, parallel plates, whose mutual distance is adjustable. The plates thus define a narrow opening of a given, constant width.

The tiles are continuously moved along a path and under the aforesaid opening laying on a suitable horizontal conveyor, e.g. a belt conveyor. The funnel is placed transversely with as regards the conveyor.

The funnel plates extend transversely for at least the whole transverse width of the tiles. A glaze film is created by the glaze which falls from the funnel opening, the film thickness being dependent on the mutual distance between the counter-facing funnel plates, on the glaze viscosity and on the funnel internal pressure.

The glazed tiles are subsequently decorated by using silk-screen techniques, and/or by spraying the decoration product on the tiles by means of airbrushes or other known spraying devices. This product is applied to the tiles while they are moved on a conveyor. The above decoration devices are generally operated automatically, in a suitable phase relationship with the tiles position.

The aforesaid product normally consists of a glaze, having different colour and/or composition than the previously applied glaze film, but it can also consist of other known compounds, e.g. chemical compounds containing metallic salts, which can provide decorating effects that make the tiles similar to some worked, natural stones. The above products are applied by means of airbrushes or other known spraying devices, while the tiles are transported on a conveyor, and in a phase relationship with the tile position.

More particularly, there is actually a considerable interest for obtaining such natural stone effects, consisting of a series of colour striations and shades, which are given to the natural stone by inclusions of a different stone, or of the same stone having a slightly different chemical composition, as is the case of marble. The results obtained until now are not satisfactory, and the tiles so obtained, although they have a pleasant looking, are still far from being likely to be confused with the real stone.

In the known art, the glaze film is sometimes created by means of different devices, by example provided with a kind of bell-shaped output unit, fit to obtain a glaze film which has a substantially cylindrical shape.

### Summary of the invention

The main object of the present invention is to disclose a new method for decorating glazed articles, and more particularly for decorating ceramic tiles, which allow the base glaze film and the decoration product to be applied to the tiles at the same time.

Another object of the present invention is to obtain a plurality of decorating effects which makes the tiles visual aspect very similar to that of some natural stones.

A further object of the present invention is to make decorating patterns which are substantially repeatable as many times as desired.

A further object of the present invention is to disclose a method for decorating tiles wherein the decorating product is spread onto the tiles, together with the base glaze film, without completely blend with this latter.

A further object is to disclose a such method which moreover allows the portion of glaze film which doesn't reach the tile to be held unpolluted from the decorating product.

A further object of the present invention is to disclose a device for decorating ceramic tiles which carries out the aforesaid method.

All the objects stated above are completely attained, according to the Claims contents, by a method for decorating ceramic tiles and the like wherein a series of tiles to be glazed and decorated is transported along a transport line, and below a glazing head fit to create a glaze film to be spread on the same tiles. The present method substantially comprises the following operating phases: supporting, preferably in an intermittent way, a side of at least one portion of the glaze film after its output from the glazing head; applying a decorating product on the opposite side of the glaze film, after it has been output from the glazing head and before it reaches the tile surface; spreading the glaze film and, the decorating product on it, on the tile being transported under the glaze film; collecting the remaining portion of the glaze film under the tiles conveying means, by means of a collecting and/or recycling tank, the part of the glaze film which has been polluted by the decorating product being moreover collected into a further container, provided inside the aforesaid tank.

### Brief description of the drawings

All the characteristic features of the present invention will be disclosed in the following detailed description, according to the subsequent Claims, with particular reference to the accompanying drawings, wherein:
- figure 1 shows a schematic front view of a first embodiment of the decorating device that carries out the method of the present invention;
- figure 2 shows a schematic a side view of the device of figure 1;
- figure 3 shows a schematic side view of a second embodiment of the decorating device;
- figure 4 shows a sectional view along line IV-IV of figure 3;
- figure 5 shows a third embodiment of the decorating device;
- figure 6 shows a different configuration of the auxiliary container for the polluted glaze.

### Detailed description of the invention

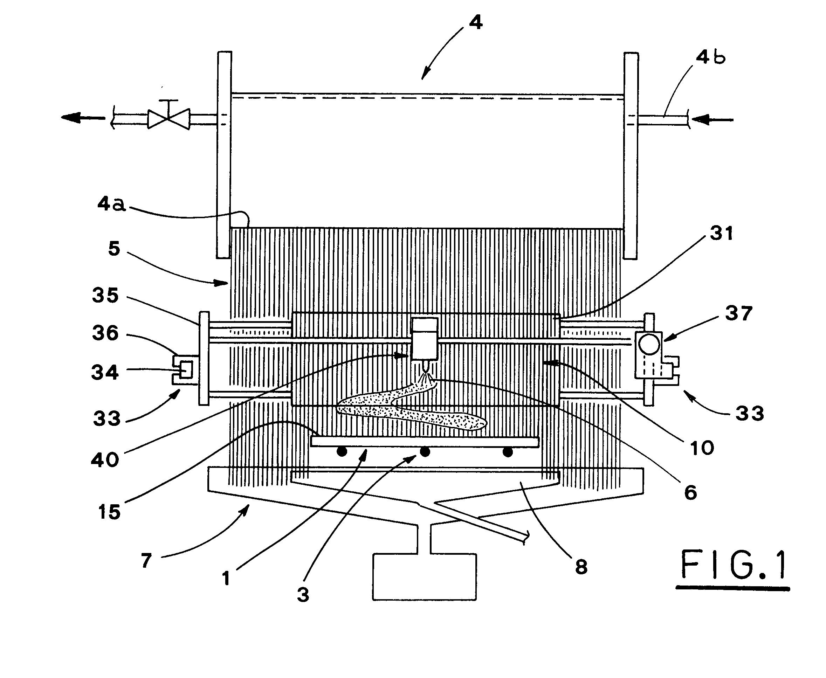

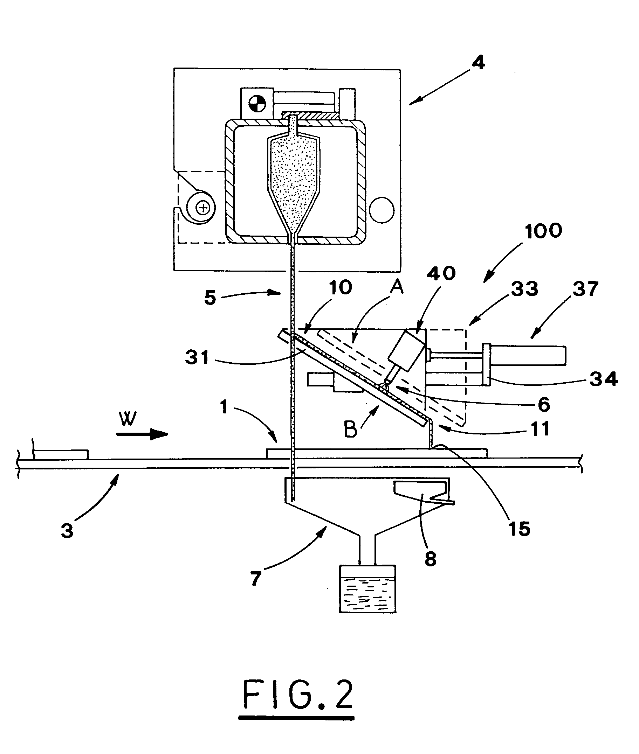

Referring now to figures 1 and 2, a first embodiment of a device 100 for decorating ceramic tiles or the like according to the present invention is disclosed in the following. The aforesaid decorating device 100 operates in an apparatus for glazing and decorating ceramic tiles 1, together with a glazing device 4 of known type, e.g. a flat film glazing head. This glazing head is able to create a continuous glaze film 5 free falling along a vertical plane. More particularly, in the aforesaid figures, the glazing head 4 is an airtight and pressure operated glazing head, that is, it is provided with a closed funnel and with means for feeding glaze under pressure through an input opening 4b.

It is to be intended that, for the purposes of the present invention, a glazing device 4 of any type can be used, even operated at atmospheric pressure, provided that it is able to generate a glaze film 5.

The aforesaid glazing and decorating apparatus is provided with a tile conveyor 3, preferably consisting of a belt conveyor. Tiles are continuously transported along a predefined path passing under the glazing head 4, in a transport direction W, such that the glaze film 5 intercepts the conveyor 3 and the tiles 1 substantially crosswise.

A collect and/or recycling tank 7 is provided under the conveyor 3, in alignment relationship with the glazing device 4, for collecting the glaze film 5 which doesn't match the tiles 1, and for conveying the unpolluted portion thereof toward the glazing device feeding means. In this way, the unpolluted portion of the glaze film can be reused several times.

The decorating device 100 comprises glaze conveying means 30, fit to intermittently intercept the aforesaid glaze film 5, during its free falling, for diverting a portion 10 thereof along an alternative path 11, while keeping it substantially unbroken, i.e. keeping its laminar conformation. Interception is made in a suitable phase relationship with the tiles 1 position on the conveyor 3.

More particularly, the conveying means 30 comprises a plate 31, which has a substantially rectangular shape, arranged crosswise as to the glaze film 5 flow. The plate 31 is supported by corresponding supporting members 33, inclined upstream to downstream as regards the above mentioned transporting direction W.

The width of plate 31 is preferably substantially greater than the width of a tile 1, and it symmetrically exceeds the tile 1 borders. The reasons of that will appear evident later on in this description.

The aforesaid tank 7 extends, in a longitudinal direction as to the conveyor 3, beyond the downstream edge of the plate 31, in order to collect a portion of the diverted glaze film 10 which falls from said edge.

Inside the tank 7, and below the plate 31 downstream edge, an auxiliary container 8 is provided, the width of which is substantially equal to the tiles width. The auxiliary container 8 is fit to collect the portion of the diverted glaze film 10, still polluted by the decorating product 6, which is not spread onto the tiles 1. It is moreover provided with a pipe, not shown, which allows the polluted glaze to be conveyed outside.

The above mentioned supporting members 33, in the present embodiment, particularly comprise a pair of fixed guides 34, arranged sideways of the plate 31. For each fixed guide 34 a side supporting frame 35 and a carriage 36 are provided, this latter being mounted on the supporting frame 35 and fit to reciprocally roll in its own fixed guide 34.

The glaze conveying means 30 moreover comprises actuating means 37, fit to reciprocally move the plate 31 between an idle position A (shown with dashed lines in figure 2) and an operating position B (shown with continuous lines in the same figure).

In the above idle position A, the plate 31 doesn't matches the glaze film 5, and it leaves the same film to flow down to the tank 7. While in the operating position B, the plate 31 intercepts a central portion 10 of the glaze film 5 and diverts said portion 10 along the alternative path 11. Due to the above described shape of the plate 31, the whole alternative path 11 is located downstream of the glaze film 5, as to the transport direction W, and it intercepts the moving tiles 1 downstream of the original falling path of glaze film 5, at a glaze spreading line 15.

The above mentioned actuating means 37 comprises, in the present embodiment, a pneumatic ram, having a stroke width sufficient to reciprocally move the plate 31 between the idle position A and the operating position B. Nevertheless, the actuating means 37 could as well consist of a different known reciprocating device, e.g. a motor driven group consisting of a crank coupled with a corresponding rod.

Moreover, it is to be intended that, although the above described supporting members 33 and actuating means 37 are fit to move the plate 31 in a reciprocating way along a linear path, it is also possible to provide supporting members 33, together with a corresponding actuating means 37 which are able to move the plate 1 in a different way. This movement of plate 31 between the idle position A and the operating position B could be made, e.g., by rotating the plate 31 around a given axis of rotation, without exiting from the scopes of the present invention.

The present decorating device 100 moreover comprises glaze application means 40, fit to spray an amount of a decorating product 6 onto the diverted glaze film 10, while it is running on the alternative path 11 and before it is spread onto a tile 1. The decorating product 6 preferably consists of a glaze having different colour and/or composition of the one forming the diverted glaze film 10, but it could be any other known product, in a liquid or powdery state, suitable to be used for decorating tiles.

The glaze application means 40 are arranged above the plate 31, in a visual relationship with the diverted glaze film 10, and they can consist of a conventional air-operated sprayer, as by example an airbrush, or of an airless sprayer, or of a kind of tube arranged crosswise as to the diverted glaze film 10, as well. This latter tube would be provided with a plurality of holes, fit to eject the decorating product 6 toward the diverted glaze film 10.

All of the above described sprayers, as well as their use and mounting, are universally known to all people reasonably skilled in the art. Accordingly, they will not be described in details in the following. They can have a fixed or movable support, so as to make them movable, e.g., crosswise, and moreover providing them with driving means for driving them along a predefined path. It is also possible to mount several sprayers 40, loaded with decorating glazes 6 having different colours, and to use them separately or in combination, in order to obtain on the tiles 1 a greater number of decorating patterns.

Moreover, the sprayer 40 can eject the decorating glaze 6 at any direction matching the diverted glaze film 10. In fact, the decorating glaze 6 can be sprayed onto the diverted glaze film 10 perpendicularly to this latter, as well as at downstream or upstream directions as regards its falling direction. All these different directions of spraying will result in as many effects on the diverted glaze film 10 and, by consequence, as many decorating patterns on the tiles 1.

The positional control of the tiles 1, as well as the plate 31 movements and the sprayer 40 operating, are made, in a mutual phase relationship, by means of an electronic control box, suitably connected to some positional transducers giving the correct tile position on the conveyor 3.

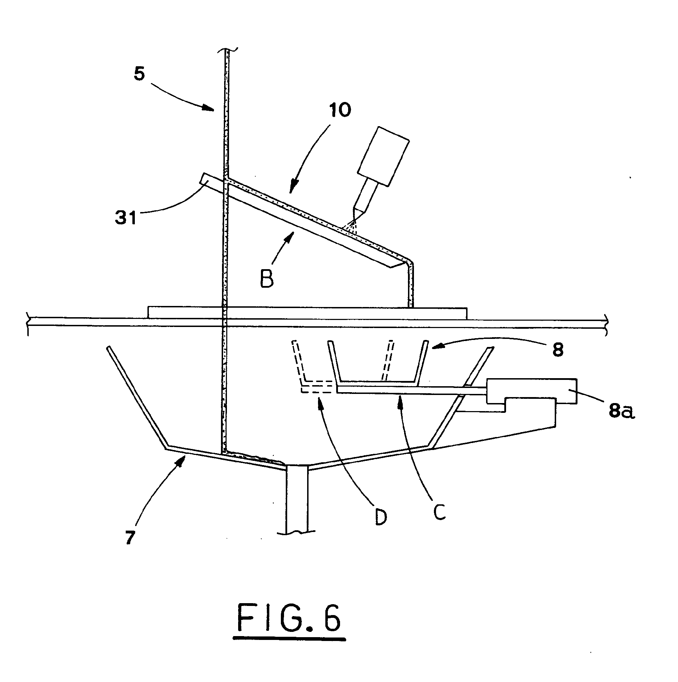

According to a structural variant of the above described embodiment, which is shown in figure 6, plate 31 is held in its operating position B. The auxiliary container 8 is reciprocally movable, in a phase relationship with the tiles 1 position and with the operation of sprayer 40, between a collecting position C (shown with continuous lines in figure 6) and an idle position D (shown with dashed lines in the same figure). While in its collecting position C, the auxiliary container 8 intercepts the polluted portion of the diverted glaze film 10. If the auxiliary container 8 is held in its idle position D, it doesn't intercept the diverted glaze film 10, which has not been polluted by the sprayer 40, and which then flows undisturbed toward the tank 7. An actuating member 8a, consisting of a pneumatic ram, is connected to the auxiliary container 8, in order to allow its reciprocal translation between positions C and D.

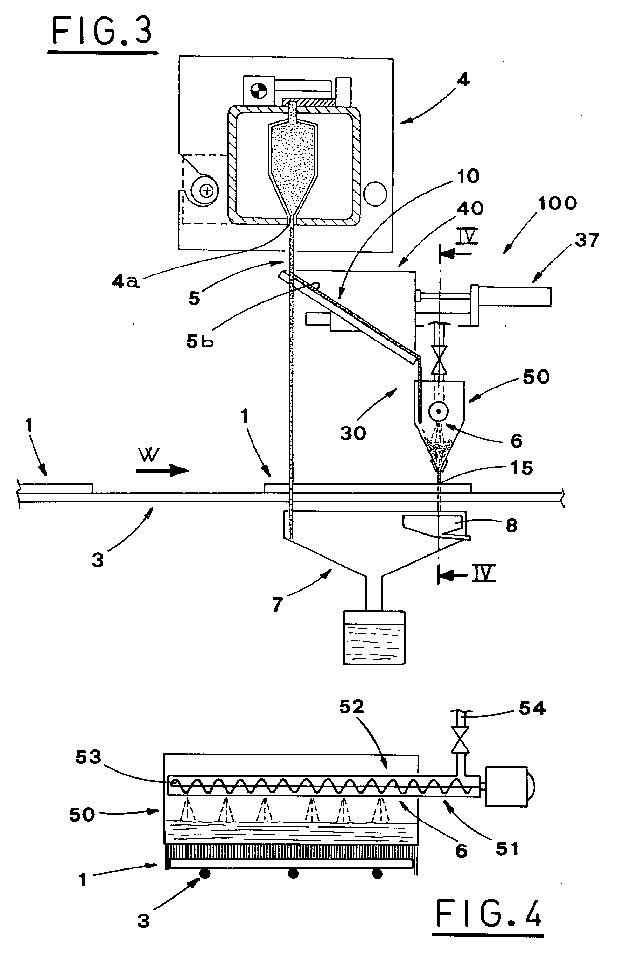

In a second embodiment of the present decorating device 100, which is shown in figures 3 and 4, the glaze film diverting means 30 comprises, besides the aforesaid plate 31, a further glazing head 50, arranged along the alternative path 11, just downstream from the plate 31. This further glazing head 50 is fit to receive the diverted glaze film 10 coming from the plate 3, to break it, and then to create it again just downstream. Thus the remaining path of the diverted glaze film 10 remains unchanged, until it reaches a tile 1 passing underneath. Because of its particular function, the further glazing head 50 is preferably an open glazing head, operated at atmospheric pressure.

In this second embodiment, the glaze application means 40 is located inside the further glazing head 50 (see figure 4). More particularly, it consists of a glaze screw feeder 51, which comprises a pipe 52 containing an Archimedean screw 53. The screw feeder 51 extends inside the further glazing head 50, crosswise to the glaze film flow. Pipe 52 is provided with a series of suitably sized and spaced holes, fit for gradually release the decorating product 6. This latter is fed to the screw feeder 51 by means of a feeding pipe 54, preferably provided with a one-way valve.

The decorating device 100 according to the above described second embodiment also comprises a tank 7 for glaze collecting and/or recycling, and an auxiliary container 8 for the polluted, non re-usable glaze.

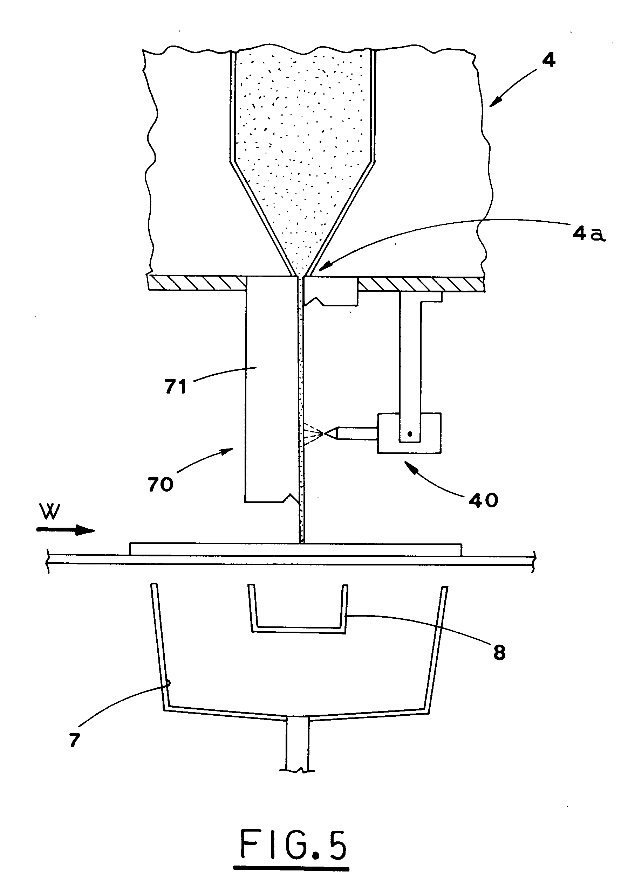

In a third embodiment, which is shown in figure 5, the present decorating device 100 is provided with glaze conveying means 70 which comprises a supporting plate 71, extending downwards from the output slit 4a of the glazing head 4. Preferably, the supporting plate 71 is an extension of the upstream wall of the aforesaid output slit 4a, so as to guide the glaze film 5, without break it, during the first part of its fall. The transverse width of the supporting plate 71 is significantly greater than the width of the tiles 1 to be glazed, and is preferably equal to the glaze film 5 width.

The supporting plate 71 is preferably slightly inclined to downstream, as to the vertical free fall of the glaze film 5, so as to guarantee that this latter is well supported without a substantial modifications of its fall speed and thickness constancy. In any case, the supporting plate 71 can be also mounted vertically, or with a different angle of inclination, depending on the film glaze characteristics that it is intended to obtain. Normally, bigger angles of inclination lead to a slower, thicker glaze film 5.

The support plate inclination can also made adjustable, by hinging it around an horizontal axis located at the output slit 4a, for optimising the glaze film characteristics according to different glaze density and viscosity values. This will depend, of course, on the kind of glaze which is used at a given time.

Below the glazing head 4 and the conveyor 3, the above described tank 7 and auxiliary container 8 are provided. Because the support plate is supposed to be held steady during the glazing operations, the auxiliary container 8 is made reciprocally movable, between a collecting position C and an idle position D, in a suitable phase relationship with the tiles position on the conveyor 3, as already described for the previous embodiments of the present invention.

The glaze application means 40, for the present third embodiment, is substantially the same of that described for the first embodiment of the decorating device 100. In this case, the sprayer 40 could be advantageously mounted on the bottom face of the glazing head 4, downstream from the output slit 4a.

In the method for decorating tiles and the like according to the present invention, when carried out with the decorating device 100 as from the aforesaid first embodiment, the plate 31 is moved between the above mentioned idle position A and operating position b, in a suitable phase relationship with the position of a corresponding tile 1, to be glazed and decorated, on the conveyor 3. More particularly, if no tiles are approaching the glaze spreading line 15, the plate 31 is held in its idle position A, and it doesn't intercept the glaze film 5. In this situation the glaze film 5 falls undisturbed and flows into the tank 7, from which it is recycled and sent to the glazing head 4.

When a tile 1, transported by the conveyor 3, is just upstream from the falling plane of the glaze film 5, the plate 31 is driven to its operating position B, wherein it intercepts a portion of the glaze film 5 and diverts it through the alternative path 11. The plate 31 shape and its slope allow the diverted glaze film to be routed along the alternative path 11 without break it, i.e., while maintaining its laminar configuration. The plate length and the conveyor speed are chosen so that the diverted glaze film 10 reaches the transport plane, at the glaze spreading line 15, just when this latter is also reached by the front edge of the tile 1 to be glazed.

At a given time before the tile 1 is reached by the diverted glaze film 10, the sprayer 40 is moreover actuated. This latter, depending on its configuration and setting, ejects one or more jets of decorating glaze 6 toward the diverted glaze film 10 supported by the plate 31. The timing sequence for actuating the sprayer 40, as well as its movements and other operating parameters, are suitably set according to different types of decorating patterns which are intended to obtain.

It could be pointed out that repeating the same sprayer timing sequences on different files would lead to obtain very similar decorating patterns thereon. Moreover, some programmed pattern variations could be created on a set of tiles, in order to create a so called "tiles panel".

By suitably controlling the output jet pressure for the decorating glaze 6, this latter reaches the surface of the diverted glaze film 10 without destroying its laminar shape, by virtue of the supporting effect provided by the plate 31. Depending on the chemical composition, density and viscosity of the glazes forming the base film and the decorating glaze, there will a different degree of mutual mixing and shading, before the glaze film and the decorating glaze have dried up. This also increases the number and the kind of decorating effects which can be obtained by using the present method.

The diverted glaze film 10, after the decorating glaze 6 has been applied thereon, continues to flow along the alternative path 11 until it flows out of the plate 31, and then it falls vertically until it spreads on the tile 1 at the glaze spreading line 15.

The above described mode of spraying a decorating glaze 6 on the diverted glaze film 10 can lead to obtain on the tiles 1 some visual effects which make them very similar to natural stone tiles. In fact, it is possible to create on the tile special patterns, glaze fringes or shades, which look like those of natural stones, e.g. marble.

When the diverted glaze film 10 leaves the lower edge of plate 31, because of physical effects mostly depending on the glaze viscosity, there is a contraction in the same diverted glaze film 10, at its side borders. That is, the film transverse width at the glaze spreading line 15 is smaller than that of the glaze film portion diverted by the plate 31. For this reason the width of plate 31 must be significantly greater than the tile width. Only in this case the glaze film width at the glaze spreading line 15 will be equal or greater than the tile 1 width, and the diverted glaze film 10 will cover the whole tile 1.

When the rear edge of tile 1 crosses the glaze spreading line 15, the plate 31 is moved to its idle position A, and it doesn't intercept the glaze film 5 anymore. This latter is then free to entirely flow down to tank 7. The residual portion of the diverted glaze film 10, which is still flowing on the plate 31, and which is still partially polluted by the decorating glaze 6, continues to flow down to the auxiliary container 8, to be conveyed outside of the glazing apparatus. Nevertheless, the amount of wasted glaze is a small percent of the non-used glaze, and the most part of it remains unpolluted, it is collected in the tank 7 and goes to be used again.

In the practical use of the present decorating device 100, it is still more advantageous to provide means for intermittently intercept the glaze film 4 in view of a glaze save, because normally tiles 1 are placed discontinuously on the conveyor 3, some of them being very close one each other, and others being spaced out. This mostly depends on some lacks in feeding tiles to the conveyor 3, either due to some stop in the previous tiles production line, or to some defects found in tiles during their flowing toward the glazing apparatus. Said lacks can lead to wide voids in the tiles stream. In this case, all the glaze ejected by the glazing head 4 is collected by the tank 7, and then it is sent to pumping means for reusing it.

According to a variant of the above described method, the plate 31 is held fixed in its operating position B (see figure 6) of continuously intercepting of the glaze film 5, and the auxiliary container 8 is reciprocally movable between a collecting position C and an idle position D. In this case, there is a continuous flow of diverted glaze film 10 along the alternative path 11.

While no tiles 1 are approaching the glaze spreading line 15, the auxiliary container is held in its idle position D, the sprayer 40 is idle as well, and the diverted glaze film 10 flows down to the tank 7. When a tile 1 approaches the glaze spreading line 15, the sprayer 40 is actuated, in a suitable phase relationship with the tile crossing of said line 15, for spraying a decorating pattern onto the diverted glaze film 10. The container 8 is then moved to its collecting position C, wherein it collects the glaze film portion which are not spread onto the tile 1, and which is still polluted by the decorating glaze 6 (practically, a glaze film portion which immediately follows the crossing of the glaze spreading line 15 by the rear edge of a tile).

A further variant of the present method is carried out by the decorating device 100 according to its above described second embodiment. In this case, when the diverted glaze film 10 leaves the downstream edge of the plate 31, it is conveyed into the aforesaid further glazing head 50, which breaks the glaze film by collecting it into its funnel. The screw feeder 51 is then operated, at a due time before the front edge of a tile 1 reaches the glaze spreading line 15, and a suitable amount of decorating glaze 6 flows into the funnel. This latter is partially mixed with the glaze already present inside the funnel. Both components flow out of the further glazing head, again in the form of a glaze film 10, wherein the distribution of decorating glaze 6 in the base glaze depends on the glaze releasing mode of the screw feeder 51. Finally, the output glaze film spreads on the tile 1.

The modes of carrying out the present decorating method by the aforesaid third embodiment of decorating device 100 is evident, in view of what has been described for the previous device embodiments. In fact, in this case the glaze film 5 is immediately supported and guided, just after leaving the output slit 4a of the glazing head 4, by the supporting plate 71, which doesn't affect the glaze film 5 laminar characteristics when it is not subject to spraying by the sprayer 40. In this case, the glaze film 5 is applied to the moving tiles 1 as they pass under the bottom edge of the supporting plate 71.

As a tile 1 is approaching the spreading position, sprayer 40 is operated, according to pre-defined operating modes (which depend on the desired decorating patterns), for spraying the decorating glaze 6 on the supported glaze film. The spraying timing is of course synchronized with the time needed to a specific portion of glaze film for reaching the tile surface.

The complete support provided to the glaze film 5 by the supporting plate 71 prevents that any breaks occur during the spraying phase, and allow the same glaze film 5 to leave the bottom edge of the supporting plate 71 unchanged, and carrying the decorating product 6.

It is to be intended that the auxiliary container 8 is moved between its collecting position C and its idle position D, in a phase relationship with the tiles position and with the sprayer 40 operation, in the same way already described for the present method as from the variant of the first embodiment of the decorating device 100.

The advantages which are attained by the present invention consist, first of all, in that the glaze film and the decorating glaze are simultaneously spread on the tile, subsequently to their mutual interaction and partial mixing. This allows a great number of new decorating effects and patterns to be obtained.

A further advantage comes from the possibility to obtain on tiles, with the present method and decorating device, decorating effects which look very similar to visual effects and patterns typical of the natural stones.

Another advantage is that said decorating effects can be indefinitely repeated, in a very similar form, on a number of tiles.

Another advantage is that the most part of the glaze film which is not applied to the tiles is not polluted by the decorating glaze, and then it can be collected and reused without affecting the base colour of the subsequent tiles to be glazed.

It is to be intended that the above detailed description has been given for exemplifying purposes. Therefore, not essential constructive details or operating phases can different from the illustrated ones, remaining within the protective limits of the present invention, as claimed in the following claims.

## Claims

1. Method for decorating tiles or similar articles, a series of said tiles (1) to be glazed and decorated being transported on a conveyor (3) according to a pre-defined transporting direction (W), below a glazing device (4) fit to generate a glaze film (5) to be applied to said tiles (1), said method being **characterized in that** it comprises the following operating phases: supporting a side face (5a) of at least one portion (10) of said glaze film (5), when it leaves said glazing device (4); applying at least one decorating product (6) on the opposite face of said glaze film portion (10), after it has left said glazing device (4) and before it reaches said tile (1); spreading said glaze film and decorating product on said tile (1) being transported on said conveyor (3); collecting the residual portion of said glaze, not applied to said tile (1), under said conveyor (3), by means of a collecting tank (7).

2. Method according to claim 1, **characterized in that**, during said supporting phase, said portion (10) of glaze film (5) falling from said glazing device (4) is intercepted and diverted along an alternative path (11), wherein said diverted glaze film (10) intercepts said tiles (1) at a glaze spreading line (15), the width of said diverted glaze film (10) being equal or greater than the width of said tile (1) to be glazed and decorated; said decorating product (6) being applied to said diverted glaze film (10) along said alternative path (11).

3. Method according to claim 2, **characterized in that** said glaze film (5) is intermittently intercepted and diverted, in a phase relationship with the approach of said tiles (1) to said glaze spreading line (15), and the non-diverted glaze film (5) is allowed to flow, undisturbed and unpolluted, down to a collecting tank (7).

4. Method according to claim 2, **characterized in that** said alternative path (11) is entirely comprised downstream from said free-falling glaze film (5), as regards as said transporting direction (W).

5. Method according to claim 2, **characterized in that** the width of said diverted glaze film (10) is substantially greater than the width of said tile (1), and that at least part of said diverted glaze film (10) flows sideways of said tiles (1).

6. Method according to claim 2, **characterized in that** said diverted glaze film (10) is held substantially unbroken along said alternative path (11), and that said decorating product (6) is directly sprayed on the unsupported side face (5b) of said diverted glaze film (10).

7. Method according to claim 2, **characterized in that** said diverted glaze film (10) is interrupted along said alternative path (11), and then re-created downstream from said interruption, by means o a further glazing device (50), and that said decorating product (6) is applied to said glaze inside said further glazing device (50).

8. Method according to claim 7, **characterized in that** said decorating product (6) is applied to said glaze by ejecting said decorating product (6) into said further glazing device (50) by means of a screw feeder (51).

9. Method according to claim 1, **characterized in that** during said supporting phase said portion (10) of said glaze film (5) is guided by a fixed supporting plate (71), consisting of an upstream wall extension of the output slit (4a) of said glazing device (4), for at least a part of its falling path, and said decorating product (6) is sprayed on said portion of glaze film (10) when it is supported by said supporting plate (71).

10. Method according to claim 9, **characterized in that** said portion of glaze film (10) is guided along a path which substantially matches the free fall path of said glaze film (5).

11. Method according to claim 9, **characterized in that** said portion of glaze film (10) is guided along a path which is slightly inclined downstream from the free fall path of said glaze film (5).

12. Method according to claim 1, **characterized in that** the portion of glaze film (10), polluted by said decorating product (6), which doesn't reaches said tile (1), is collected inside an auxiliary container (8).

13. Device for decorating tiles and similar articles, a series of said tiles (1) to be glazed and decorated being transported on a transport direction (W) by a conveyor (3), below a glazing device (4) fit to create, from its output slit (4a), a glaze film (5) to be applied to said tiles (1), said device (100) for decorating tiles being **characterized in that** it comprises: conveying and supporting means (30,70) for said glaze film (5), placed between said output slit (4a) of said glazing device (4) and said conveyor (3), fit to support one face (5a) of at least a portion of said glaze film (5), for at least a part of its falling path; applying means (40) of a tiles decorating product (6), arranged near to said conveying and supporting means (30,70), fit to apply said decorating product (6) on a face (5b), of said glaze film (5), opposite to said supported face (5a), before that a part of said glaze film (5) is spread onto said tiles (1); at least one tank (7), fit to collect the unpolluted part of said glaze film (5) not spread onto said tiles (1).

14. Decorating device according to claim 13, **characterized in that** said conveying and supporting means (30) comprises a plate (31), extending at least for the transverse width to be glazed and decorated of said tile (1), reciprocally movable between an idle position (A), wherein it leaves said glaze film (5) to flow undisturbed down to said tank (7), and an operating position (B), wherein it intercepts said glaze film (5) for diverting at least a portion (10) thereof along an alternative path (11), which intercepts said tile (1) downstream from the undisturbed glaze film falling line, in a phase relationship with the tiles position on said conveyor (3) as to said alternative path (11); said applying means (40) being placed above said plate (31) and being oriented toward this latter.

15. Decorating device according to claim 14, **characterized in that** said plate (31) is provided with supporting members (33), fit to support the same plate (31) inclined from upstream to downstream, and actuating means (37), fit to reciprocally move said plate (31) on said supporting members (33), between said idle position (A) and operating position (B).

16. Decorating device according to claim 15, **characterized in that** said supporting members (33) comprise at least one fixed guide (34), a support frame (35), to which said plate (31) is mounted, and at least one carriage (36), mounted on said support frame (35), running inside said fixed guide (34).

17. Decorating device according to claim 15, **characterized in that** said actuating means (37) comprises at least one pneumatic ram.

18. Decorating device according to claim 13, **characterized in that** said conveying and supporting means (70) comprises at least one supporting plate (71), having a transverse width covering at least the whole transverse width to be glazed and decorated of said tile (1), extending downwards from the upstream side of said output slit (4a) of the glazing device (4), and fit to support said glaze film (5) during a portion of its fall, said applying means (40) being arranged downstream from said glaze film (5) and being-oriented towards this latter.

19. Decorating device according to claim 18, **characterized in that** said supporting plate (71) consists of an extension of an upstream wall of said output slit (4a).

20. Decorating device according to claim 18, **characterized in that** said supporting plate (71) extends to a direction which substantially matches the free fall direction of said glaze film (5).

21. Decorating device according to claim 18, **characterized in that** said supporting plate (71) extends to a direction which is slightly inclined to downstream.

22. Decorating device according to claim 18, **characterized in that** the inclination of said supporting plate (71) is made adjustable.

23. Decorating device according to claim 18, **characterized in that** said applying means (40) are mounted on a bottom wall of said glazing device (4).

24. Decorating device according to claim 13, **characterized in that** said applying means (40) is reciprocally movable on a transverse direction as regards the falling direction of said glaze film (5).

25. Decorating device according to claim 13, **characterized in that** said applying means (40) comprises at least one airbrush.

26. Decorating device according to claim 13, **characterized in that** said applying means (40) comprises at least one pressure-operated airless sprayer.

27. Decorating device according to claim 13, **characterized in that** said applying means (40) comprises at least one crosswise arranged tube, provided with a series of holes fit to eject said decorating glaze (6) toward said glaze film (5).

28. Decorating device according to claim 13, **characterized in that** said collecting tank (7) includes an auxiliary container (8), having a transverse width which substantially matches the tiles (1) width, fit to collect a polluted portion of glaze film (5) to be rejected.

29. Decorating device according to claim 28, **characterized in that** said auxiliary container (8) is reciprocally movable, in a phase relationship with the actual position of a tile (1) to be glazed and decorated, between a collecting position (C), wherein it intercepts said portion of glaze film (5) below the same tile (1), and an idle position (D), wherein it doesn't intercepts said glaze film (5).

30. Device for decorating tiles and similar articles, a series of said tiles (1) to be glazed and decorated being transported on a transport direction (W) by a conveyor (3), below a glazing device (4) fit to create, from its output slit (4a), a glaze film (5) to be applied to said tiles (1), said device (100) for decorating tiles being **characterized in that** it comprises: at least one plate (31), placed below said glazing device (4) and having a width equal or greater than the width to be glazed and decorated of said tiles (1), fit to divert at least a portion (10) of said glaze film (5) along an alternative path (11), downstream from the undisturbed glaze film falling line, in a phase relationship with the tiles position on said conveyor (3) as to said alternative path (11); a further glazing device (50), placed along said alternative path (11), downstream from said plate (31), fit to receive said diverted glaze film (10), to break it and then to create it again just downstream; glaze applying means (40), arranged inside of said further glazing device (50), fit to eject a decorating product (6); a collecting tank (7), placed below said further glazing device (50) and fit to collect the portion of said glaze film not spread onto said tiles (1).

31. Decorating device according to claim 30, **characterized in that** said further glazing device (50) comprises an open, atmospheric-pressure operated glazing head.

32. Decorating device according to claim 30, **characterized in that** said applying means (40) comprises a screw feeder (51).
